# EUROPÄISCHE PATENTANMELDUNG

(11) **EP 2 744 028 A1**
(43) Veröffentlichungstag der Anmeldung: **18.06.2014**
(21) Anmeldenummer: 12197127.9
(22) Anmeldetag: 14.12.2012
(51) Int. Cl.: H01M 8/10, H01M 8/12, H01M 4/86, H01M 4/88, H01M 8/00

(54) **Elektrode zum Betrieb einer Brennstoffzelle und Verfahren zur ihrer Herstellung**

(71) Anmelder: Technische Universität Darmstadt, 64285 Darmstadt (DE)
(72) Erfinder: Abele, Eberhard, 77815 Bühl (DE); Stoffregen, Hanns, 60327 Frankfurt (DE); Lang, Sebastian, 63937 Weilbach (DE); Hampe, Manfred Josef, 53572 Unkel (DE)
(74) Vertreter: Stumpf, Peter

(57) **Zusammenfassung**

Gegenstand der Erfindung ist eine Elektrode zum Einsatz in einer Brennstoffzelle mit mindestens einer zumindest abschnittsweise porösen und in einem Temperaturbereich von 10°C bis 1000°C bevorzugt 10°C bis 300°C elektrisch leitfähigen und mechanisch stabilen Schicht.

## Beschreibung

Die vorliegende Erfindung betrifft eine Elektrode zum Betrieb einer Brennstoffzelle sowie deren Herstellungsverfahren.

Brennstoffzellen sind elektrochemische Energiewandler, die die chemische Reaktionsenergie eines kontinuierlich zugeführten Brennstoffes und eines Oxidationsmittels in elektrische Energie wandeln. Grundsätzlich ist es auch möglich das Verfahren umzukehren, dann fungiert die Brennstoffzellen als Elektrolysezelle. Als Oxidationsmittel dient oftmals Sauerstoff als Brennstoff Wasserstoff. In diesem Fall handelt es sich um Wasserstoff-Sauerstoff-Brennstoffzellen. Alternative Brennstoffe sind Kohlenwasserstoff-Verbindungen wie etwa Methanol, Ethanol oder Methan.

Brennstoffzellen bestehen prinzipiell aus zwei Elektroden, die durch eine gasundurchlässige und Ionen-leitende Membran, die als Elektrolyt (lonenleiter) fungiert, voneinander getrennt sind.

Wenn Brennstoffzellen mit anderen Brennstoffen betrieben werden, werden auch andere Elektrolyte eingesetzt. Der Unterschied zwischen den Typen von Brennstoffzellen besteht im Elektrolyten und in den verwendeten Brennstoffen. Wichtige Parameter für die Verwendung von Brennstoffzellen sind deren Leistungsdichte, Leistungsgewicht und Betriebstemperatur. Diese sind besonders bei mobilen Brennstoffzellen, wie sie für den Einsatz von Kraftfahrzeugen benötigt werden, von hoher Bedeutung. Maßgeblichen Einfluss auf diese Parameter hat die Ausführungsform der Elektroden einer Brennstoffzelle.

Brennstoffzellen bestehen üblicherweise aus planaren Bipolarplatten sowie einer Gasdiffusions- und katalytischen Schicht (Sandwich-Bauweise). Die Bipolarplatten sind üblicherweise massiv aus Metallen, Graphit oder leitfähigen Kunststoffen ausgeführt. Die Gasdiffusionsschicht (Engl. GDL - Gas Diffusion Layer) besteht standartmäßig aus verwebten oder papierartigen Kohlenstofffasern. Die katalytische Schicht, die auf die Gasdiffusionsschicht oder direkt auf die Membran aufgebracht wird (bspw. durch Rakeln, Sprühen oder Coating-Verfahren), besteht oftmals aus katalytisch-aktiven Nanopartikeln, meist aus Edelmetallen wie Platin, Palladium oder Ruthenium, in Verbund mit einem leitfähigen Trägermaterial oft auf der Basis von Kohlenstoff. Diese aus verschiedenen Schichten bestehende Brennstoffzelle (oder Brennstoffzellenstapel bei der Reihenschaltung einzelner Brennstoffzellen) erhält üblicherweise seine mechanische Stabilität durch einen Verspannrahmen, so dass der Schichtverbund aus "GDL - katalytische Schicht - Membran - katalytische Schicht - GDL" (Engl. MEA - Membrane Electrode Assembly) ggf. in Verbindung mit einem Dichtrahmen zwischen je zwei Bipolarplatten eingespannt ist. Nachteilig an dieser Art der Brennstoffzelle ist, dass bei einem planaren Aufbau, verglichen mit anderen Formen, die innere Oberfläche an der die Reaktion stattfinden kann vergleichsweise klein ist und ein aufwendiges Dichtkonzept zwischen den einzelnen Schichten notwendig ist.

Dieses Problem wurde beispielsweise in EP 0469831 B1 durch die Verwendung von tubulare Elektroden für Brennstoffzellen aus Feststoffelektrolyten gelöst. Als Stützstruktur dient hier ein Trägerrohr, um das die Elektrode angeordnet ist. Diese Art von Elektrode eignet sich aber nur für Hochtemperaturbrennstoffzellen, da sie bei niedrigen Temperaturen (<300°C) nicht ausreichend leitend ist.

Des Weiteren sind tubulare Elektroden für die Verwendung in Brennstoffzellen aus gewickelten Polymerfolien bekannt (beispielweise beschrieben in DE19964159B4). Die Folie selbst ist hierbei gasdurchlässig, besitzt aber keine inneren Hohlräume, ist also nichtporös. Außerdem eignet sich diese Art von Elektroden nicht für Hochtemperaturbrennstoffzellen.

### Aufgabe

Der Erfindung liegt die Aufgabe zugrunde, eine Elektrode zu entwickeln, die besonders für den Einsatz in einer Brennstoffzelle zur Wandlung chemischer in elektrische Energie geeignet ist, mechanisch stabil ist, das heißt ohne zusätzliche Stützungselemente wie beispielsweise einen Verspannrahmen auskommt und in einem breiten Temperaturbereich, insbesondere auch bei Temperaturen unter 300°C aber auch bei Temperaturen bis 1000°C, einsetzbar ist. Gleichzeitig soll sie einen Brennstoffzellenaufbau mit einer großen aktiven Zellfläche und somit einer hohen Leistungsdichte ermöglichen.

### Lösung der Aufgabe

Diese Aufgabe wird durch eine Elektrode, welche zumindest abschnittsweise eine elektrisch leitfähige, poröse und mechanisch stabile Schicht aufweist, gelöst.

Das Material der Schicht wird dabei so gewählt, dass diese in einem Temperaturbereich von 10°C bis 1000°C bevorzugt 10°C bis 300°C elektrisch leitfähig ist.

In einer Ausführungsform der erfindungsgemäßen Elektrode umfasst das Material für eine elektrisch leitfähige Schicht der Elektrode einen oder mehrere der folgenden Bestandteile: Tantal, Titan, Platin, Palladium, Gold sowie deren Legierungen und/oder Stähle insbesondere hochlegierte Edelstähle mit hohen Chrom sowie Molybdän-Gehalten. Die vorstehende Aufzählung von Materialien ist dabei keinesfalls abschließend.

Weiterhin geeignet zur Konstruktion der Elektrode ist es, eine Elektrode aus einem elektrisch nicht leitendem Material (Kunststoff und/oder Keramik) herzustellen und diese anschließend elektrisch leitend zu beschichten. Auch ist es möglich einen elektrisch leitenden Kunststoff grundsätzlich zu verwenden.

Als Porosität wird das Verhältnis von Hohlraumvolumen zu Gesamtvolumen eines Stoffes oder Stoffgemisches bezeichnet. Sie dient als klassifizierendes Maß für die tatsächlich vorliegenden Hohlräume und somit der inneren Oberfläche. Ein Material welches einen hohen Anteil an inneren Hohlräumen aufweist, gilt als porös.

Durch die Porosität dieser Schicht, besitzt die Elektrode eine große aktive innere Oberfläche, wodurch die Leistungsdichte der mit dieser Art von Elektroden konstruierten Brennstoffzellen hoch ist.

Die erfindungsgemäßen Elektroden bilden die Anode und/oder die Kathode der Brennstoffzelle.

In einer weiteren Ausführungsform weist die erfindungsgemäße Elektrode eine katalytisch wirksame Schicht auf. Dies erhöht die Umsetzungsgeschwindigkeit der an ihr stattfindenden Reaktionen.

In einer weiteren Ausführungsform weist die erfindungsgemäße Elektrode abschnittsweise mindestens eine Oberflächenmodifikation auf. Diese dient zur Vergrößerung der Elektrodenoberfläche, wodurch die Leistungsdichte erhöht ist. Oberflächenmodifikationen sind beispielsweise in einer dreiecks-, halbkugel- oder sternförmigen Geometrie bzw. einer Kombination dieser Geometrien ausgeführt. Jedoch ist die Form der Oberflächenmodifikation nicht auf diese Geometrien beschränkt.

Die Elektrode weist eine bestimmte geometrische Form auf, diese wird als Gerüstgeometrie bezeichnet.

In einer weiteren Ausführungsform weist die erfindungsgemäße Elektrode zumindest abschnittsweise mindestens eine Gerüstgeometrie mit einer tubularen und/oder Faltenbalgartige-Form auf. Sie dient zur Vergrößerung der Elektrodenoberfläche, wodurch die Leistungsdichte erhöht ist. Jedoch ist die Form der Gerüstgeomietrie nicht auf diese Geometrien beschränkt.

Bei einer tubularen Gerüstgeometrie ist die Hauptachsenrichtung (z-Richtung) die Längsachse des Tubus.

In einer weiteren Ausführungsform weist die Elektrode zumindest abschnittsweise eine Variation der Querschnittsfläche in Hauptachsenrichtung (z-Richtung) oder orthogonal dazu auf auf. Diese Variation der Querschnittsgeoemtrie ist sinnvoll, um bspw. einer Anpassung der Brenstoffzellen an besondere Platzanforderungen zu erfüllen.

In einer weiteren ausführungsform weist die Elektrode zumindest Abschnittsweise die Gerüstgeometrie eine polygonartige Querschnittsfläche bspw. Dreieck, Viereck oder Sechseck auf. Diese Aufzählung ist dabei nicht abschließend.

In einer weiteren Ausführungsform weist die Elektrode einen in Hauptachsenrichtung (z-Richtung) Variablen und/oder einen nicht punkt- und/oder achsensymmetrischen Querschnitt auf. Denkbar wäre ein elliptischer Querschnitt auf einer Seite der Elektrode, der zumindest abschnittsweise stetig oder unstetig in eine rechteckige Querschnittsfläche auf der anderen Elektrodenseite übergeht.

Gemäß einer Ausführungsform der Erfindung beträgt der Außendurchmesser der röhrenförmigen Elektrode zwischen 1 mm und 50 cm. Die Größe der röhrenförmigen Elektrode kann somit in breitem Maße den jeweiligen Bedürfnissen angepasst werden.

Gemäß einer Ausführungsform der Erfindung besitzt die erfindungsgemäße Elektrode zumindest abschnittsweise eine katalytisch wirksame Schicht.

Die Herstellung der erfindungsgemäßen Elektrode, insbesondere für eine Brennstoffzelle, kann vorzugsweise durch ein additives Fertigungsverfahren erfolgen, welches folgende Schritte umfasst:
- Auftragen einer Schicht aus Partikeln auf eine Fertigungsplattform
- Bestrahlen eines ausgewählten Teils der Schicht, entsprechend einem Querschnitt der Elektrode, mit einem Energiestrahl, so dass die Partikel im ausgewählten Teil mit ihren jeweiligen Nachbarn verbunden werden (insbesondere durch Sintern, partielles oder vollständiges Schmelzen
- Wiederholen der Schritte des Auftragens und des Bestrahlens für eine Mehrzahl von Schichten, so dass die verbunden Teile der benachbarten Schichten sich verbinden, um so die Elektrode zu bilden.

Der Energiestrahl umfasst bevorzugt einen Laserstrahl. Es ist aber auch beispielweise ein Elektronenstrahl, Infrarotstrahl oder eine Heizung anwendbar, solange der Energieeintrag in die Partikelschicht mindestens ausreichend hoch ist, um eine Verbindung der Partikeln zu bewirken. So bildet sich eine Struktur mit hoher Porosität.

In einer ersten Ausführungsform des Herstellungsverfahrens werden die Partikel dabei nicht vollständig aufgeschmolzen, so dass die vor dem Verbinden vorhanden Zwischenräume zwischen den Partikeln zumindest teilweise erhalten bleiben und so die Porosität sichergestellt wird. Die Energie der Strahlenquelle ist also nicht ausreichend, um ein vollständiges Aufschmelzen und somit Herstellen eines dichten Gefüges zu ermöglichen.

In einer weiteren Ausführungsform des Herstellungsverfahrens werden die einzelnen Partikel partiell und/oder vollständig aufgeschmolzen. Dabei wird der Energiestrahl so fokussiert und abgelenkt werden, dass zwischen den einzelnen "Scan-Vektoren" nicht-belichtete Regionen verbleiben, die später die Porosität ausmachen. Dort wo der Energiestrahl auf das Pulverbett trifft findet ein vollständiges oder zumindest teilweises Aufschmelzen der Partikel-Randzone statt.

Es ist möglich eine CAD-Datei der Elektrode zu erzeugen, in der zumindest abschnittweise Hohlräume vorhanden sind und diese durch Herstellverfahren physisch erzeugt werden. Die Hohlräume könnten bspw. rautenförmig sein und durch Wahl eines "Unit-Cell-Approaches" mittels geeigneter CAD-Software in einen Vollkörper eingebracht werden. Auch ist es möglich, eine/mehrere poröse "Unit-Cell/s" zu konstruieren, die dann in geeigneter Weise entsprechend der gewünschten Elektrodengeometrie im Raum vervielfältigt wird/werden und durch das additive Fertigungsverfahren hergestellt wird/werden. Bei unterschiedlichen "Unit-Cells" können diese beliebig im Raum miteinander kombiniert werden. Auch wäre eine Randomisierung der "Unit-Cells" denkbar, um so eine Porosität zu erreichen.

In einer weiteren Ausführungsform des Herstellungsverfahrens werden während des schichtweisen Aufbaus der Elektrode, das Material und/oder aber die Pulvermorphologie, diese umfasst insbesondere die Schüttdichte und/oder Korngröße der verwendeten Partikel, gewechselt. Damit werden bessere Eigenschaften in Bezug auf Porosität (bspw. durch eine gröbere Körnung des Pulvers), mechanische Stabilität, Leitfähigkeit und/oder Herstellgeschwindigkeit erzielt.

Beispielsweise wird ein Porositätsgradient (stetig oder unstetig) zumindest abschnittsweise in die erfindungsgemäße Elektrode eingebracht. Möglich ist dies durch Anwendung einer der zuvor dargestellten Ansätze oder durch Kombination dieser. Der Porositätsgradient ist dabei nicht notwendigerweise in alle Raumrichtungen gleichermaßen vorhanden sein. Durch Bildung eines Porositätsgradienten könnte beispielsweise erreicht werden, dass ein Übergangsbereich (dicht-porös) eine bessere mechanische Stabilität aufweist.

Die genannten Herstellungsverfahren ermöglicht eine freie Formgebung. Das heißt es ermöglicht die Herstellung von Elektroden, mit verschiedenen Gerüstgeometrien und Oberflächenmodifikationen.

Die bevorzugte Partikelgröße beträgt bei allen Herstellungsverfahren 0,0001mm bis 0,2mm.

In einer weiteren Ausführungsform der Erfindung umfasst eine Brennstoffzelle, welche mindestens eine erfindungsgemäße Elektrode aufweist, zusätzlich zu dieser Elektrode auch mindestens ein Anschluss- und/oder Zuleitungselemente, welches nach dem oben beschrieben Verfahren hergestellt wurde. Insbesondere wird/werden dieses/diese direkt und in einem Herstellungsschritt einstückig mit der Elektrode zusammen selbst gefertigt. Ein solches Anschlussstück ist beispielsweise als Gewinde ausgeführt. Andere Anschlussformen sind z.B. Bajonettanschlüsse, Klemmanschlüsse, Flanschanschlüsse, Steckanschlüsse. Diese Aufzählung ist nicht vollständig, auch andere Anschlussformen sind dem Fachmann möglich.

Das heißt, die gefertigte Elektrode ist nicht nur mechanisch stabil, sondern sie verfügt auch über alle relevanten Zuleitungs- (beispielsweise einen Gaskanal) und Anschlusselementen (beispielsweise ein Gewinde), die für den Aufbau einer Brennstoffzelle oder eines Brennstoffzellen-Verbunds notwendig sind. Ein beispielhafter Aufbau umfasst unterschiedliche Zuleitungs- und/oder Anschlusselemente an den verschiedenen Enden der Elektrode.

Bevorzugte Ausführungsbeispiele der vorliegenden Erfindung werden nun anhand der beigefügten Zeichnungen näher erläutert. Dabei zeigen:
**Fig. 1** schematisch die Herstellung der erfindungsgemäßen Elektrode,
**Fig. 2** schematisch die Herstellung der tubulare Brennstoffzelle mit der erfindungsgemäßen Elektrode als Anode,
**Fig.3****:** tubulare Brennstoffzelle mit erfindungsgemäßer Elektrode als Anode in der Draufsicht,
**Fig.4****:** tubulare Brennstoffzelle mit Erfindungsgemäße Elektrode als Anode im Querschnitt,
**Fig.5****:** erfindungsgemäße Elektrode mit verschiedenen Oberflächenmodifikationen und Gerüstgeometrien und
**Fig.6** Brennstoffzelle mit erfindungsgemäßer Elektrode und 2 Anschlussstücken in seitlicher Ansicht und im Aufriss.

In der nachfolgenden Beschreibung sind weitere Aspekte und Ausführungsbeispiele der vorliegenden Erfindung offenbart. Zudem wird auf die beigefügten Zeichnungen, die einen Teil derselben bilden, und in denen mittels Veranschaulichung ein oder mehrere Beispiele, bei denen die Erfindung praktiziert werden kann, gezeigt sind, Bezug genommen. Diese Offenbarung der Erfindung soll die Merkmale oder Hauptelemente der Erfindung nicht auf ein spezifisches Ausführungsbeispiel beschränken. Vielmehr können die verschiedenen Elemente, Aspekte und Merkmale, die in den Ausführungsbeispielen offenbart sind, durch einen Fachmann auf dem Gebiet auf verschiedene Arten kombiniert werden, um einen oder mehrere Vorteile der vorliegenden Erfindung zu erzielen. Es sei darauf hingewiesen, dass andere Ausführungsbeispiele verwendet werden können, und strukturelle oder logische Veränderungen vorgenommen werden können, ohne von dem Schutzbereich der vorliegenden Erfindung abzuweichen. Gleiche Bezugszeichen bezeichnen entsprechende ähnliche Teile.

Insbesondere wird im Folgenden beispielhaft eine Brennstoffzelle beschrieben, welche eine Gerüstmodifikation mit tubularer Geometrie aufweist. Dies ist aber keine Einschränkung der möglichen Brennstoffzellengeometrie.

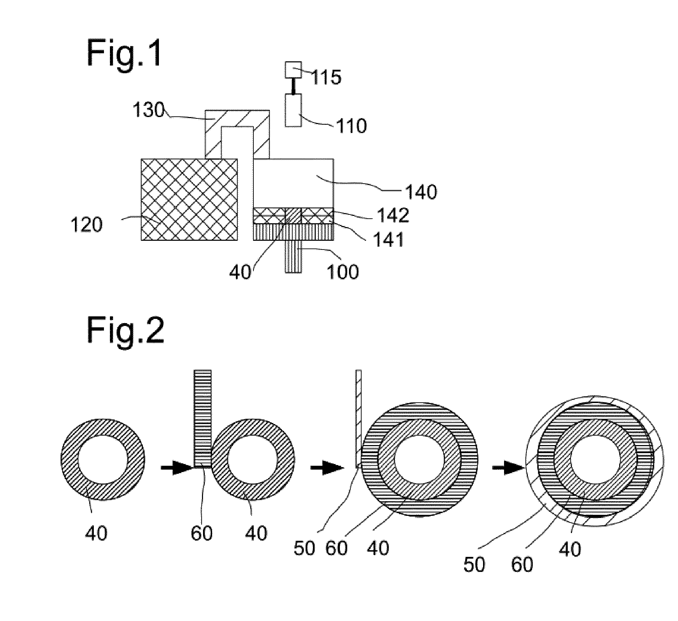

**Fig. 1** zeigt schematisch die Herstellung einer tubularen Brennstoffzelle **10** mit der erfindungsgemäßen Elektrode als Anode **40.** Dabei wird im Teilbild **Fig. 1a** die Herstellung der Elektrode gezeigt.

Die Herstellung der Elektrode **40** erfolgt schichtweise auf einer Fertigungsplattform **100.** Die Anode **40** wird schichtweise in einem Fertigungsbehälter mit Pulverbett **140** erzeugt. Dazu werden Schichten mit der Dicke von 0,001 mm bis 0,2 mm auf die Fertigungsplattform **100** aufgetragen. Das Pulver umfasst einen oder mehrere der folgenden Bestandteile: Tantal, Titan, Platin, Palladium, Gold sowie deren Legierungen und/oder Stähle und im speziellen hochlegierte Stähle mit hohen Chrom sowie Molybdän-Gehalten.

Die Schichten **(141, 142)** werden durch eine Ansteuerung des Lasers **110,** entsprechend der vor der Herstellung in sein Steuerungseinheit **115** eingegebener Daten, schrittweise in das Pulverbett gesintert oder eingeschmolzen. Der Laser **110** wird dabei entlang des Bauteilquerschnittes gesteuert. Bei der Absenkung der Fertigungsplattform **100** stellt der Pulverbehälter **120** die Pulvermenge mittels eines Bereitstellungsmittels (z.B. Rakel) **130** für eine weitere Schicht zur Verfügung. Die Energie, die vom Laser **130** zugeführt wird, wird vom Pulver der Schicht **(141,142)** absorbiert und führt zu einem lokal begrenzten Sintern/Schmelzen, d.h. dem oberflächlichen Verschmelzen von Partikeln. Diese schmelzen dabei nicht vollständig auf. Dabei bleiben ihre Form und ein überwiegender Teil der Zwischenräume zwischen den Partikeln erhalten, so dass eine poröse und leitfähige Struktur entsteht.

Das Teilbild **Fig. 2** zeigt nun die weiteren Schritte zur Herstellung der Brennstoffzelle **10.**

Auf der Elektrode, welche die Anode **40** darstellt und welche katalytisch aktiv ist, wird nun, nachdem sie fertig gestellt wurde die Elektrolyt-Schicht **60** aufgebracht. Diese ist als eine Membran beispielsweise aus einem Polymer ausgebildet. Diese wird wie eine Folie auf die Anode **40** aufgewickelt. Danach wird auf dieses Membran **60** noch die Kathode **50** aufgebracht. Diese besteht beispielweise aus einem elastischen Metallgitter, ist katalytisch aktiv, und wird ebenfalls gewickelt. Eine weitere Möglichkeit ist es, die Kathode aus gesinterten Halbschalen auszuführen, die dann umschließend angebracht werden. Die Herstellung der Kathode erfolgt dabei durch ein additives Fertigungsverfahren.

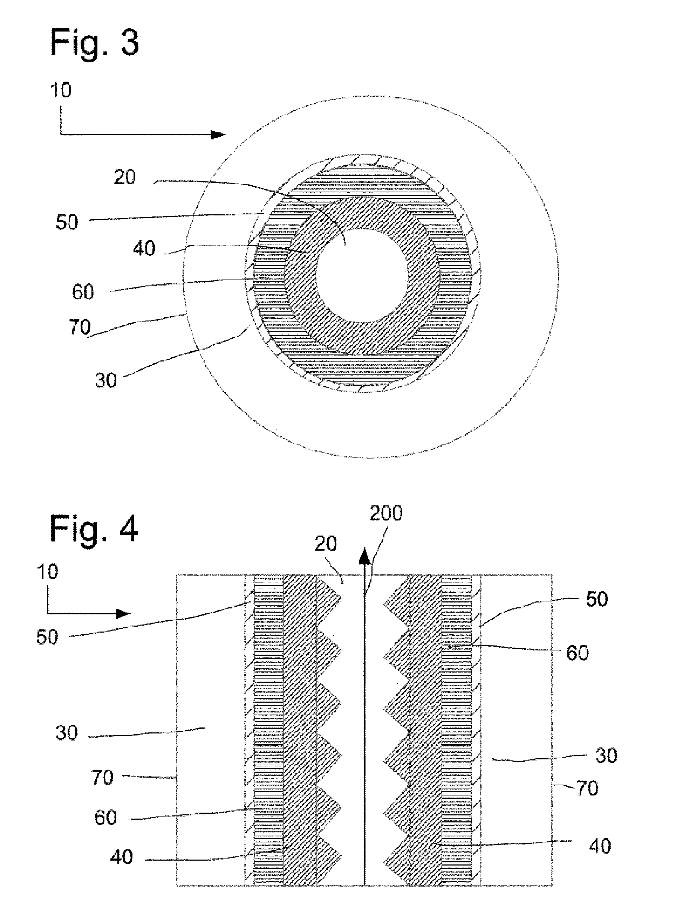

**Fig. 3** und **Fig. 4** zeigen schematisch eine tubularen Brennstoffzelle **10.** Diese weist eine erfindungsgemäße Elektrode als Anode **40** auf. Diese ist aufgebaut aus einem äußeren Gaskanal **20** über den Sauerstoff zugeführt wird, einen inneren Gaskanal **30** über den Wasserstoff zugeführt wird. Beide Kanäle **(20,30)** sind durch eine Membran **60** voneinander separiert. Die elektrische Kontaktierung geschieht über zwei Elektroden: die Kathode **50** und die erfindungsgemäße Anode **40.** Beide Elektroden **(40,50)** sind gasdurchlässig.

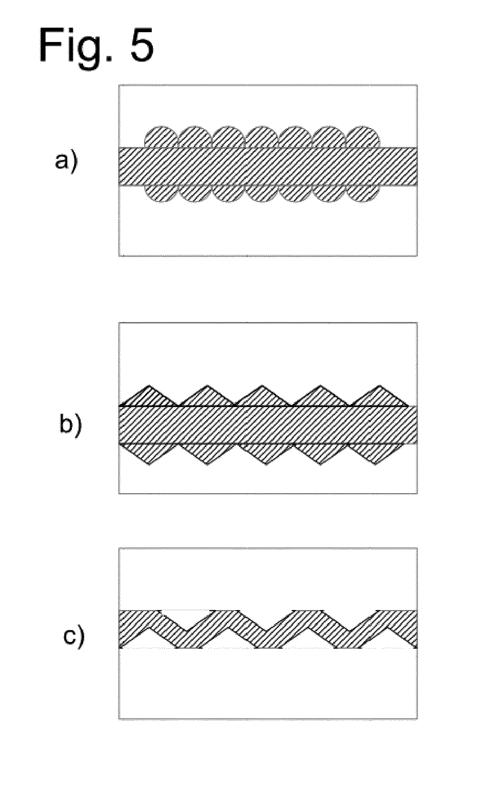

Die mechanische Stabilität der Brennstoffzelle wird durch den metallischen und porösen Aufbau der Anode **40** erreicht. Zu Erhöhung der Reaktionsgeschwindigkeit des Sauerstoffs sowie des Wasserstoffs weisen beide Elektroden **(40,50)** eine katalytische Schicht (nicht abgebildet) auf oder bestehen aus einem katalytisch wirksamen Material. Das Material umfasst dabei beispielsweise Platin oder Palladium. Umgeben ist die Brennstoffzelle von einem gasdichten Behälter **70.** **Fig.5** zeigt die erfindungsgemäße Elektrode mit verschiedenen Oberflächenmodifikationen und Gerüstgeometrien. Diese vergrößern die aktive Zellfläche, an der Sauerstoff und der Wasserstoff in der Brennstoffzelle reagieren. Dies dient der Erhöhung der Leistungsdichte.

In Teilabbildung a) besitzt die Elektrode eine Gerüstgeometrie mit einer tubularen Form und Oberflächenmodifikationen, welche als Halbkugeln ausgebildet sind.

In Teilabbildung b) besitzt die Elektrode eine Gerüstgeometrie mit einer tubularen Form und Oberflächenmodifikationen, welche als Dreiecke ausgebildet sind.

In Teilabbildung c) besitzt die Elektrode eine Gerüstgeometrie mit einer Faltenbalkform.

Die Herstellung der Oberflächenmodifikationen erfolgt beispielsweise über einen sogenannte "**U**nit-Cell-**Approach"**, bei dem eine Einheitszelle zum Beispiel eine Pyramide oder eine Halbkugel über die Elektrodenoberfläche mittels geeigneter CAD-Software automatisch vervielfältigt wird. Auch kann eine Variation der "Uni-Cell" abschnittsweise erfolgen, um so die Oberflächentopologie der Elektrode im Raum zu variieren.

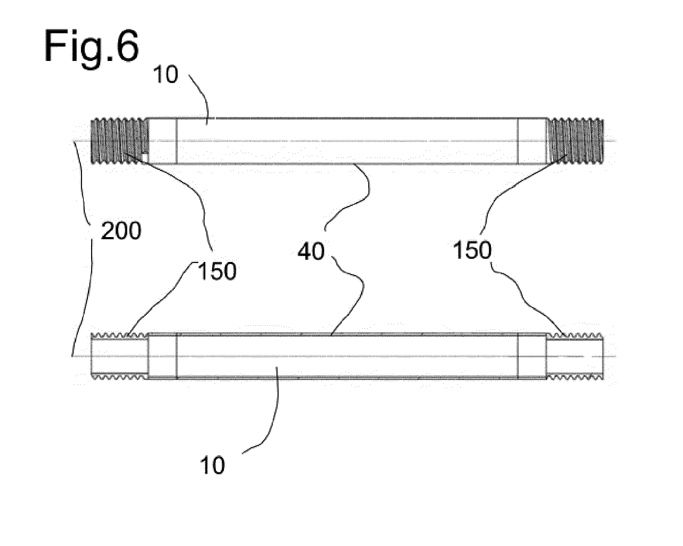

**Fig.6** zeigt eine Brennstoffzelle **10** mit erfindungsgemäßer Elektrode und Anschlusselementen **150,** die hier als Gewinde ausgeführt wurden. Diese Anschlusselemente **150** sind mit dem gleichen Verfahren wie die erfindungsgemäße Elektrode als Anode **40** selbst gefertigt. Dies geschieht in einem einstufigen Prozess, der zu einer einstückigen Verbindung von Anschlusselementen und der Elektrode führt. Der untere Teil der Abbildung zeigt den Aufriss der Brennstoffzelle **10** entlang seiner Hauptachse **200.** Er zeigt, dass Elektrode **40** und Anschlusselemente **150** hierbei einstückig verbunden sind. Aus Übersichtsgründen sind die anderen Schichten hier nicht abgebildet.

Die obige Beschreibung der bevorzugten Ausführungsbeispiele wird vorgesehen, um jeden Fachmann in die Lage zu versetzen, die vorliegendem Erfindung zu verstehen und zu verwenden. Die reichen Modifikationen dieser Ausführungsbeispiele sind für den Fachmann vollständig offensichtlich und, die darin enthaltenen grundlegenden Prinzipien können ohne die Verwendung erfinderischer Fähigkeiten auf andere Ausführungsbeispiele angewandt werden.

### Bezugszeichen:

- 10: Brennstoffzelle
- 20: innerer Gaskanal
- 30: äußerer Gaskanal
- 40: Anode
- 50: Kathode
- 60: Elektrolytschicht
- 70: Behälter
- 100: Fertigungsplattform
- 110: Laser
- 115: Steuerungseinheit
- 120: Pulverbehälter
- 130: Bereitstellungsmittel
- 140: Fertigungsbehälter mit Pulverbett
- 141, 142: Pulverschicht
- 150: Anschusselement
- 200: Hauptachserichtung (z-Richtung)

## Patentansprüche

1. Elektrode zum Einsatz in einer Brennstoffzelle, **dadurch gekennzeichnet dass** sie mindestens eine zumindest abschnittsweise poröse und in einem Temperaturbereich von 10°C bis 1000°C bevorzugt 10°C bis 300°C elektrisch leitfähige und mechanisch stabile Schicht aufweist.

2. Elektrode gemäß Anspruch 1, **dadurch gekennzeichnet, dass** die Schicht einen oder mehrere der folgenden Bestandteile umfasst: Tantal, Titan, Platin, Palladium, Gold sowie deren Legierungen und/oder Stähle insbesondere hochlegierte Stähle mit hohen Chrom sowie Molybdän-Gehalten.

3. Elektrode gemäß Anspruch 1, **dadurch gekennzeichnet, dass** diese zumindest abschnittsweise mindestens eine Oberflächenmodifikation aufweist.

4. Oberflächenmodifikation gemäß Anspruch 3 **dadurch gekennzeichnet, dass** diese eine dreiecks-, halbkugel- oder sternförmigen Geometrie oder einer Kombination dieser Geometrien aufweist.

5. Elektrode gemäß Anspruch 1, **dadurch gekennzeichnet, dass** diese zumindest abschnittsweise mindestens eine Gerüstgeometrie mit einer tubularen oder Faltenbalg-Form aufweist.

6. Elektrode gem. Anspruch 1, **dadurch gekennzeichnet, dass** zumindest abschnittsweise eine Variation der Querschnittsfläche in Hauptachsenrichtung (z-Richtung) aufweist.

7. Elektrode gem. Anspruch 1, **dadurch gekennzeichnet, dass** zumindest Abschnittsweise die Gerüstgeometrie eine polygonartige Querschnittsfläche aufweist.

8. Elektrode gemäß Anspruch 1, **dadurch gekennzeichnet, dass** diese zumindest abschnittsweise eine katalytisch wirksame Schicht aufweist.

9. Verfahren zur Herstellung der Elektrode gemäß Anspruch 1 beinhaltend folgende Schritte:
- Auftragen einer Schicht aus Partikeln auf eine Fertigungsplattform
- Bestrahlen eines ausgewählten Teils der Schicht, entsprechend einem Querschnitt der Elektrode, mit einem Energiestrahl, so dass die Partikel im ausgewählten Teil mit ihren jeweiligen Nachbarn verbunden werden
- Wiederholen der Schritte des Auftragens und des Bestrahlens für eine Mehrzahl von Schichten, so dass die verbunden Teile der benachbarten Schichten sich verbinden, um so die Elektrode zu bilden.

10. Verfahren gemäß Anspruch 9 zur Herstellung der Elektrode gemäß Anspruch 1, bei dem während des schichtweisen Aufbaus der Elektrode, das Material und/oder aber die Pulvermorphologie gewechselt werden.

11. Brennstoffzelle beinhaltend mindestens eine Elektrode gemäß Anspruch 1 hergestellt nach einem Verfahren gemäß Anspruch 9 oder 10, **dadurch gekennzeichnet, dass** diese mindestens ebenfalls nach einem Verfahren gemäß Anspruch 9 gefertigtes Anschluss- und/oder Zuleitungselemente, welche einstückig mit der Elektrode aufgeführt ist, aufweist.

12. Brennstoffzelle beinhaltend mindestens zwei Elektroden gemäß Anspruch 1 hergestellt nach einem Verfahren gemäß Anspruch 9 oder 10, **dadurch gekennzeichnet dass** mindestens zwei ihrer Elektroden gleichzeitig in einem Verfahrensschritt hergestellt werden.
